# EUROPEAN PATENT SPECIFICATION

(11) **EP 2 068 218 B1**
(45) Date of publication and mention of the grant of the patent: **27.09.2017**
(21) Application number: 07023417.4
(22) Date of filing: 04.12.2007
(51) Int. Cl.: G05B 19/418

(54) **System of management of manufacturing operation items**
System zur Verwaltung von Herstellungselementen
Système de gestion d'articles d'opération de fabrication

(43) Date of publication of application: 10.06.2009
(73) Proprietor: Siemens Aktiengesellschaft, 80333 München (DE)
(72) Inventor: Magagnini, Marco, 16137 Genova (IT)
(74) Representative: Maier, Daniel Oliver

## Description

The present invention relates to a system of management of manufacturing operation items according to claim 1.

Today there is a need for enhance the management of manufacturing operation items like for example in a production line wherein production machines and associated processes of subsystems have to be managed in order to reach optimally manufacturing expectations.

The operations items are multiple for a subsystem in a production line. Mainly it is possible to differentiate productive based operation items from non productive based operation items. For example a productive based operation item can consist in a manufacturing of a piece of a product at a stage of the production line in opposite to a non productive based operation item which can consist in providing a maintenance of said stage of the production line without any physical intervention on the product per se. Document EP 0467 257 A2 discloses management of productive and non-productive process items. The term manufacturing operation is defined in the standard ANSI/ISA-95. The standard ANSI/ISA-95, or ISA-95 as it is more commonly referred, is the set of international industry specifications for developing an automated interface between enterprise and control systems.

For the management of a plurality of operation items comprising the both productive and non-productive items in order to model or simulate, to test and to validate a whole processing for associated subsystems in a production line, it is easy to understand that dependencies between operation items have to be checked in a very high complex way before a manufacturing process can be definitively approved and implemented.

One goal of the invention to be achieved is to hence be seen in providing a simple system of management of manufacturing productive and non-productive based operation items.

A preferred solution is provided according to claim 1 and presents a system of management of manufacturing operation items in a production line, comprising:
- a module on which one of productive based operation items is storable as header of a group list in relation to a manufacturing sub-system,
- for each productive based operation item at least one non-productive based operation item is storable as content of the corresponding group list, so that a hierarchically subdivision of productive/non-productive operation items in a plurality of group lists is provided in order to input them on a processing unit in a standard form.

Due that a hierarchically subdivision of productive/non-productive operation item in a plurality of group lists is permanently provided for each subsystem and their processes to be managed, a very simple and uniform/universal structure of management for all items can be advantageously obtained in a central way at the processing unit.

Dependent claims are also provided in the following part and presents further advantageous of the invention.

In a preferred embodiment of the invention it is possible to make the system of management interactive by means of interfacing means with an operator or a central management system that can simply and centrally follow the foreseen hierarchy in order to define a single management profile combining optimally all kind of items according to predefined manufacturing expectations.

Furthermore the preferred system of management can be used for a plurality of profitable applications like:
- performing a simulation of management of manufacturing operation items in the production line;
- checking at least one inconstancy of management of manufacturing operation items in the production line;
- generating a release software for a management unit of manufacturing operation items in the production line.

A described system for management of manufacturing operation items in a production line is further explained and represented in following example and drawing, whereby:

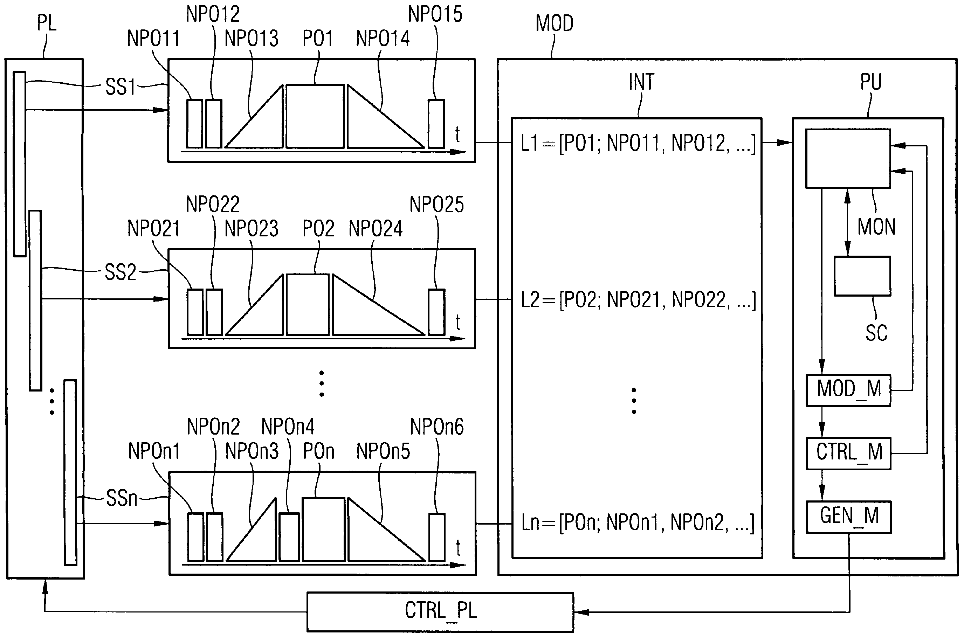

Drawing 1: represents a modular view of a system of management of manufacturing operation items in a production line.
Drawing 1 represents a modular view of a system of management of manufacturing operation items in a production line PL which comprises several subsystems SS1, SS2, ..., SSn (n ≥ 1) that can be sequentially placed machinery units necessary for a manufacturing process.

Mainly said system of management comprises following modules:
- a module MOD on which one of productive based operation items PO1, P02, ... is storable as header of a group list L1, L2, ..., Ln in relation to one of the manufacturing sub-system SS1, SS2, ...,
- for each productive based operation item at least one non-productive based operation item NPO11, NP012, ...; NPO21, NPO22, ...; ...; NPOn1, NPOn2, ... is storable as content of the corresponding group list, so that a hierarchically subdivision of productive/non-productive operation items is provided uniformly in a plurality of group lists in order to input them on a processing unit PU in a standard/uniform form.

The module MOD can provides an output signal that is inputted in a control or management unit CTRL_PL that is connected to command interfaces of the subsystems SS, SS2, ..., SSn. The command interfaces execute processes according to the operation items that have been managed and validated over the module MOD and its processing unit PU.

In the present example three different time sub-repartitions NPO11, NP012, NP013, PO1, NOP14, NP015; NP021, MP022, NPO23, P02, NP024, NP025; NPOn1, NPOn2, NPOn3, MPOn4, POn, NPOn5, NPOn6 of productive and non productive operations items are represented for three corresponding subsystems SS1, SS2, SSn. Non productive operation based items can be for example machines setups, machines cleaning, product quality checks, etc. An execution of these operations can be however strictly bounded to a primary productive operation based items in term of productivity or quality of the manufacturing. By means of the generated group lists L1, L2, L3 wherein a hierarchically sequence of operation items is provided, it is advantageously possible to standardize the kind of all operation items as well as to attribute links between them.

Although the three different time sub-repartitions are represented separately, they can overlap partially or completely in term of time. The system of management according to the invention enables to organize all operation items under a preferred time or/and quality schedule by means of group lists.

In a sample production segment, a typical example of chronological phases for modelling a group list can be represented as follows:
- NPO11 designates a setup of subsystem SS1 before a filing/loading of a sample in said subsystem;
- NPO12 designates a material preparation phase for said sample;
- NPO13 designates said filing/loading of the sample in sub-system SS;
- P01 designates here the only productive based operation item (as header of a group list) consisting in executing a production process at the subsystem SS1;
- NPO14 designates a unloading phase of the sample out of the ubsystem SS;
- NP015 designates a cleaning phase of subsystem SS1 after the unloading phase.

The operations items can be also customable or actualisable if a new process has to be implemented, for example by exchanging or inserting a new manufacturing unit on a subsystem. For this purpose the group lists presents the advantage to be clearly actualisable over an interface and to be easy to be re-inputted and newly interpreted in the central module MOD and its processing unit PU. This is the reason why the module MOD can advantageously comprise a program based interface INT for actualising selectively the group lists. The interface INT can be a parallel input means of the module MOD that transmits all kind of operation items from each system management of subsystems SS1, SS2, ..., SSn to the processing unit PU in a group list form. That means that the interface is able to perform the hierarchical sequencing between productive and non-productive operation items. This can be manually done over an interaction of an operator on said group list before the inputting of group list in the processing unit PU. This can be also done automatically by an additional information signal outputted from each subsystem. This information signal isolates one of all productive operation items and associates hierarchically all depending non productive operation items in a corresponding group list. A combination of manually and automatically generations/actualisation of the group lists is also possible if a module of the production line requires it. A further sub-hierarchisation between group lists can be provided in the same way.

In the case of a manually check of the group lists, the interface INT is coupled to an interactive monitoring MON and selecting means SC for adding, deleting and activating all productive and non-productive operation items at the request of the operator. The interactive monitoring MON and selecting means SC can be also connected to or be part of the processing unit PU in order to control, adapt, command manufacturing processes that are required at the production line.

The processing unit PU can provide further advantageous aspects for simplifying the management of grouped operation items:
- The processing unit can comprise modelling means MOD_M for performing a simulation of management of manufacturing operation items in the production line. The modelling means MOD-M is for example a module in connection to the monitoring means MON in order to monitor a customable modelling of management after its modelling over an operator or/and over a preferred automatically optimization based on time, quality or other production related criterion.
- The processing unit can comprise controlling means CTRL_M for checking at least one inconstancy of management of manufacturing operation items in the production line. Ideally the controlling means is a module in connection with afore mentioned modelling means MOD_M (and monitoring means MON) in order to detect and exhibit defects of a performed modelling.
- The processing unit can comprise means GEN_M for generating a validated main command process by means of command signals or/and a release software for the management unit CTRL_PL of manufacturing operation items in the production line PL. Ideally the means GEN_M for generating a release software is a module in connection with the controlling means CTRL_M, so that after a successful check of a modelled management (and a possible monitoring of it), the means GEN_M outputs a command signal into the management unit CTRL_PL.

Said release software for the management of manufacturing operation item in the production line is embeddable in a main software for managing other similar release software related to possible further production lines.

All presented modules and means described in the invention can be realized over hardware means as well as parts of software that are stored on a server which controls processes of subsystems of a production line. The server is then connected to monitoring means like a touch screen in order to allow an operator to control visually the processes of management according to the invention as well as to modify them at his convenience.

## Claims

1. System of management of manufacturing operation items in a production line (PL), wherein, in the production line (PL), production machines and associated processes of subsystems have to be managed and wherein a productive based operation item is defined as a manufacturing of a piece of a product at a stage of the production line and a non productive based operation item can consist in providing a maintenance of said stage of the production line without any physical intervention on the product per se, the system is further **characterised by**
- a module (MOD) which is adapted to store one of productive based operation items (PO1, PO2, ...) as header of a group list (L1, L2, ...) in relation to a manufacturing sub-system (SS1, SS2, ...),
- and which is further adapted to store for each productive based operation item at least one non-productive based operation item (NP011, NP012, ...; NP021, NP022, ...; ...) as content of the corresponding group list, so that a hierarchically subdivision of productive/non-productive operation items in a plurality of group lists is provided in order to input them on a processing unit (PU) in a standard form.

2. System according to claim 1, wherein the module (MOD) comprising a program based interface (INT) for actualising selectively the group lists.

3. System according to claim 2, wherein the interface is coupled to an interactive monitoring (MON) and selecting means (SC) for adding, deleting and activating all productive and non-productive operation items.

4. System according to one of claims 1 to 3, wherein the processing unit comprises a modelling means (MOD_M) for performing a simulation of management of manufacturing operation items in the production line.

5. System according to one of claims 1 to 4, wherein the processing unit comprises controlling means (CTRL_M) for checking at least one inconstancy of management of manufacturing operation items in the production line.

6. System according to one of claims 1 to 5, wherein the processing unit comprises means (GEN_M) for generating a release software for a management unit (CTRL_PL) of manufacturing operation items in the production line.

7. System according to claim 6, wherein the release software for the management of manufacturing operation item in the production line is embeddable in a main software for managing other similar release softwares related to further production lines.

## Patentansprüche

1. System zur Verwaltung von Fertigungsvorgangselementen in einer Produktionslinie (PL), wobei in der Produktionslinie (PL) Produktionsmaschinen und zugeordnete Prozesse von Teilsystemen verwaltet werden müssen und wobei ein herstellungsbasiertes Vorgangselement als eine Fertigung eines Teils eines Produkts an einer Station der Produktionslinie definiert ist und ein nicht herstellungsbasiertes Vorgangselement im Durchführen einer Wartung dieser Station der Produktionslinie ohne irgendeinen physischen Eingriff an dem Produkt an sich bestehen kann, wobei das System ferner **gekennzeichnet ist durch**
- ein Modul (MOD), welches dafür eingerichtet ist, eines von herstellungsbasierten Vorgangselementen (PO1, P02, ...) als Kopf einer Gruppenliste (L1, L2, ...) zu speichern, die sich auf ein Fertigungsteilsystem (SS1, SS2, ...) bezieht,
- und welches ferner dafür eingerichtet ist, für jedes herstellungsbasierte Vorgangselement wenigstens ein nicht herstellungsbasiertes Vorgangselement (NPO11, NP012, ...; NP021, NP022, ...; ...) als Inhalt der entsprechenden Gruppenliste zu speichern, so dass eine hierarchische Unterteilung herstellungsbasierter/nicht herstellungsbasierter Vorgangselemente in eine Vielzahl von Gruppenlisten bereitgestellt wird, um sie auf einer Verarbeitungseinheit (PU) in einer Standardform einzugeben.

2. System nach Anspruch 1, wobei das Modul (MOD) eine programmbasierte Schnittstelle (INT) zum selektiven Aktualisieren der Gruppenlisten umfasst.

3. System nach Anspruch 2, wobei die Schnittstelle mit einem interaktiven Überwachungs- (MON) und Auswahlmittel (SC) zum Hinzufügen, Löschen und Aktivieren aller herstellungsbasierten und nicht herstellungsbasierten Vorgangselemente gekoppelt ist.

4. System nach einem der Ansprüche 1 bis 3, wobei die Verarbeitungseinheit ein Modellierungsmittel (MOD_M) zum Durchführen einer Simulation der Verwaltung von Fertigungsvorgangselementen in der Produktionslinie umfasst.

5. System nach einem der Ansprüche 1 bis 4, wobei die Verarbeitungseinheit Steuerungsmittel (CTRL_M) zum Prüfen wenigstens einer Unregelmäßigkeit der Verwaltung von Fertigungsvorgangselementen in der Produktionslinie umfasst.

6. System nach einem der Ansprüche 1 bis 5, wobei die Verarbeitungseinheit Mittel (GEN_M) zum Erzeugen einer Release-Software für eine Verwaltungseinheit (CTRL_PL) von Fertigungsvorgangselementen in der Produktionslinie umfasst.

7. System nach Anspruch 6, wobei die Release-Software für die Verwaltung von Fertigungsvorgangselementen in der Produktionslinie in eine Hauptsoftware um Verwalten anderer, ähnlicher Release-Softwares, die weitere Produktionslinien betreffen, einbettbar ist.

## Revendications

1. Système de gestion d'éléments d'opération de fabrication au sein d'une chaîne de production (PL), dans lequel des machines de production et des procédés associés de sous-systèmes doivent être gérés au sein de la chaîne de production (PL) et dans lequel un élément d'opération à finalité productrice est défini comme étant une fabrication d'une pièce d'un produit à une étape de la chaîne de production et un élément d'opération à finalité non-productrice peut consister en une fourniture d'un entretien de ladite étape de la chaîne de production sans une quelconque intervention physique sur le produit en soi, le système étant en outre **caractérisé par**
- un module (MOD) qui est conçu pour stocker un parmi des éléments d'opération à finalité productrice (PO1, PO2,...) en tant qu'en-tête d'une liste de groupes (L1, L2, ...) en lien avec un sous-système de fabrication (SS1, SS2,...),
- et qui est en outre conçu pour stocker, pour chaque élément d'opération à finalité productrice, au moins un élément d'opération à finalité non-productrice (NP011, NPO12, ... ; NP021, NPO22,... ;...) en tant que contenu de la liste de groupes correspondante, de sorte qu'une subdivision hiérarchique d'éléments d'opération productive/non productive dans une pluralité de listes de groupes est fournie afin de les entrer dans une unité de traitement (PU) sous une forme normalisée.

2. Système selon la revendication 1, dans lequel le module (MOD) comprend un interface basé sur un programme (INT) permettant d'actualiser de manière sélective les listes de groupes.

3. Système selon la revendication 2, dans lequel l'interface est couplé à une surveillance interactive (MON) et à un moyen de sélection (SC) permettant d'ajouter, supprimer et activer tous les éléments d'opération productive et d'opération non productive.

4. Système selon l'une quelconque des revendications 1 à 3, dans lequel l'unité de traitement comprend un moyen de modélisation (MOD_M) permettant de mettre en oeuvre une simulation de gestion d'éléments d'opération de fabrication au sein de la chaîne de production.

5. Système selon l'une quelconque des revendications 1 à 4, dans lequel l'unité de traitement comprend un moyen de commande (CTRL_M) permettant de vérifier au moins une inconstance de gestion des éléments d'opération de fabrication au sein de la chaîne de production.

6. Système selon l'une quelconque des revendications 1 à 5, dans lequel l'unité de traitement comprend un moyen (GEN_M) permettant de générer un logiciel public destiné à une unité de gestion (CTRL_PL) d'éléments d'opération de fabrication au sein de la chaîne de production.

7. Système selon la revendication 6, dans lequel le logiciel public destiné à la gestion de l'élément d'opération de fabrication au sein de la chaîne de production peut être intégré dans un logiciel principal permettant de gérer d'autres logiciels publics similaires liés à d'autres chaînes de production.
